# EUROPEAN PATENT APPLICATION

(11) **EP 2 829 705 A1**
(43) Date of publication of application: **28.01.2015**
(21) Application number: 13177820.1
(22) Date of filing: 24.07.2013
(51) Int. Cl.: F02C 6/00, F02C 9/46

(54) **Gas turbine and method of controlling gas turbine**

(71) Applicant: ALSTOM Technology Ltd, 5400 Baden (CH)
(72) Inventor: Ferreira-Providakis, Theodoros, 5430 Wettingen (CH); Singla, Ghislain, 3013 Bern (CH); Hashmi, Sami, 8956 Killwangen (CH); Meeuwissen, Thiemo, 5408 Ennetbaden (CH); Lipari, Sebastian, 5432 Neuenhof (CH)

(57) **Abstract**

The present invention relates to a gas turbine comprising, in a flow direction of a working fluid, a first combustor, a first turbine connected downstream of the first combustor, a second combustor downstream of the first turbine, a second turbine connected downstream of the second combustor, and further comprising a compressor unit to provide compressed air to the first combustor, a first fuel supply system to provide fuel to the first combustor, a second fuel supply system to provide fuel to the second combustor, and a generator to be driven by the first and second turbine, wherein the second fuel supply system comprises a fuel distribution system to distribute the fuel supply into a plurality of fuel lances, and valves are disposed between the fuel distribution system and the fuel lances. The arrangement of the valves in present invention makes the distance from the valves to the fuel lances highly reduced, and consequently less fuel will be stored and released to the combustor when load rejection occurs. Thus, a better performance on fast de-loading of the gas turbine can be achieved.

## Description

### Technical Field

The present invention relates to a gas turbine, in particular, to arrangement of valves in fuel supply line of a gas turbine. The present invention further relates to a method of controlling an existing gas turbine by equipping valves in the fuel supply line of the gas turbine.

### Background of the Invention

Gas turbine operates to produce mechanical work or thrust. Specifically, gas turbine typically has a generator coupled thereto for the purposes of generating electricity. The shaft of the gas turbine is coupled to the generator. Mechanical energy of the shaft is used to drive a generator to supply electricity to at least a power grid.

The gas turbine balances the generated power with the consumed power and adapts to the grid requirements. When suddenly disconnected from the grid, the power generated is no longer delivered to the grid and the rotor speed starts increasing. A fast de-loading of the gas turbine to idle operation is then immediately required to bring back the rotor speed to its normal operating value and avoid going into trip as fast as possible. This is the so-called "load rejection". In a gas turbine having sequential combustion consisting of two combustors, during load rejection, the gas turbine is de-loaded to idle operation by immediately switching off a combustor and by reducing the fuel mass flow with an optimal gradient. One important and critical aspect is that the fuel mass flow needs to be rapidly reduced to reduce the speed of the rotor while not causing flame-off and consequently going to trip.

US2011/0036094 discloses a method for controlling a gas turbine engine in the event of a partial or full load rejection from a generator. In order to control the engine speed when partially or fully unloaded, the fuel flow is typically reduced and redirected within the combustion system. Reducing the fuel flow will reduce the operating temperature and output of the turbine section, which will in turn, reduce the engine speed. However, care must be exercised when reducing and redistributing the fuel flow so as to maintain a stable flame in the combustor while also returning the engine to a condition capable of being reloaded as soon as possible, so as to minimize the time that electrical generation is interrupted in case of a full load rejection. In the technical solution of this disclosure, upon detection of a partial or full load rejection, the breakers are opened accordingly and then the fuel flow of the combustor is directed to corresponding fuel nozzles by adjusting the gas control valves, so as to reduce the rotor speed of the engine while maintain a flame in a downstream chamber of the combustor. By maintaining the flame in the downstream chamber while the engine speed is controlled, the recovery process to a load condition avoids use of spark ignition system and flame detectors in the upstream chamber, and the time to return to normal electrical generation is minimized.

EP2559862A1 discloses a control system for gas turbine in case of load rejection. It comprises a controller configured and adapted to signal the valve assembly to provide the fluid communication in response to a sudden de-loading of the gas turbine. A valve is arranged in the fuel supply line. When the load rejection occurs, the valve is activated upon receiving the signal from the controller to close the fuel supply line to the combustor. Thus, the speed of the rotor can be reduced due to the rapid reduction of the fuel mass flow in the fuel supply line.

The prior arts as mentioned above both disclose the control of fuel flow supply to the combustor by operating valves in the fuel supply line when load rejection occurs. However, a fast de-loading of the gas turbine to idle operation may not be achieved as expected. One reason lies in that, some amount of fuel stored in the fuel supply line downstream of the valve is still going to be delivered to the combustor after the valve is activated. As a consequence, the fuel flow released into the combustor will have a contribution to the speed of the rotor, which is not expected for the fast de-loading of the gas turbine.

### Summary of the Invention

It is an object of the present invention to provide a gas turbine to solve the problems in the prior arts.

The objects are achieved by a gas turbine comprising, in a flow direction of a working fluid, a first combustor, a first turbine connected downstream of the first combustor, a second combustor downstream of the first turbine, a second turbine connected downstream of the second combustor, and further comprising a compressor unit to provide compressed air to the first combustor, a first fuel supply system to provide fuel to the first combustor, a second fuel supply system to provide fuel to the second combustor, and a generator to be driven by the first and second turbines, wherein the second fuel supply system comprises a fuel distribution system to distribute the fuel supply into a plurality of fuel lances, the valves, i.e., shut-off valves, are disposed between the fuel distribution system and the fuel lances.

The arrangement of the shut-off valves in present invention makes the distance from the valves to the fuel lances highly reduced, and consequently less fuel will be stored and released to the combustor when load rejection occurs. Thus, the combustor can be instantly switched off and no contributions to the rotor speed increases are to be observed.

It is another object of the present invention to provide a method to improve the existing gas turbine by equipping valves in the fuel supply line of the gas turbine.

In particular, the object is achieved by a method of controlling a gas turbine having, in a flow direction of a working fluid, a first combustor, a first turbine connected downstream of the first combustor, a second combustor downstream of the first turbine, a second turbine connected downstream of the second combustor, the gas turbine further having a compressor unit to provide compressed air to the first combustor, a first fuel supply system to provide fuel to the first combustor, a second fuel supply system to provide fuel to the second combustor, and a generator to be driven by the first and second turbines, wherein the second fuel supply system comprises a fuel distribution system to distribute the fuel supply into a plurality of fuel lances. The method comprises equipping valves, i.e., shut-off valves, disposed between the fuel distribution system and the fuel lances.

### Brief Description of the Drawings

The present invention is now to be explained more closely by means of different embodiments and with reference to the drawings.
- Fig. 1: shows a schematic diagram of a gas turbine of present invention;
- Fig. 2: shows a schematic diagram of the second fuel supply line in Fig. 1; and
- Fig. 3: shows a schematic plan view of a burner of the second combustor equipped with shut-off valves.

### Detailed Description of Different Embodiments of the Invention

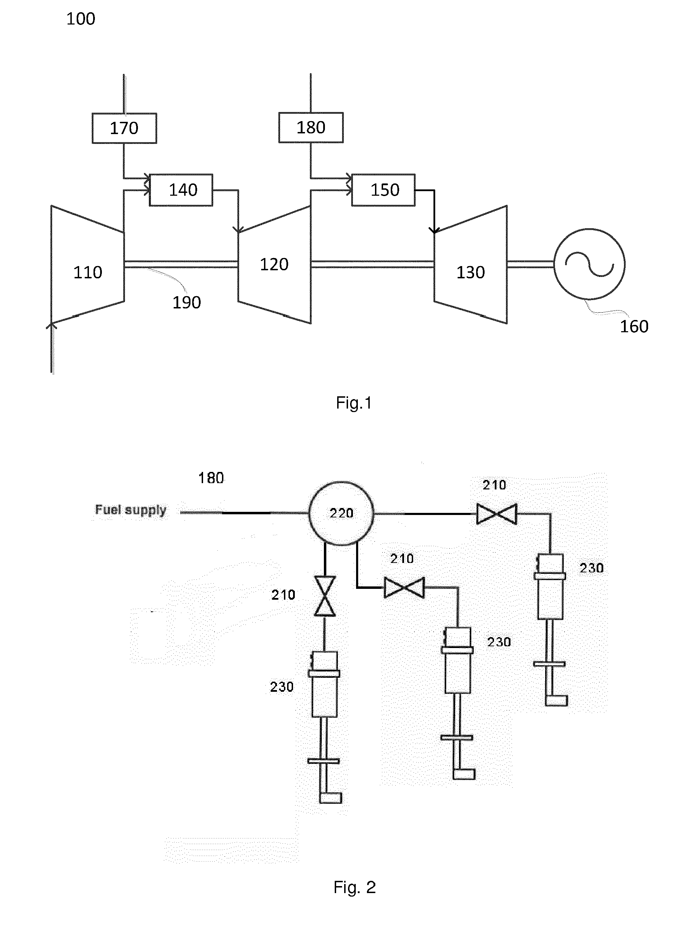

Fig.1 illustrates a schematic, simplified diagram of a gas turbine 100 with sequential combustion which is known per se. The gas turbine 100 comprises a compressor unit 110 in which the compression of the induced air takes place. The compressed air then flows into a first combustor (high-pressure combustor) 140. A first fuel supply line 170 is connected with the first combustor 140 to provide the fuel mass flow into the combustor. A first turbine (high-pressure turbine) 120 operates downstream of the first combustor 140 and the mixture of the air and gas fuel experiences a partial expansion in the first turbine 120. A second combustor (low-pressure combustor) 150 acts downstream of the first turbine 120 to receive the exhausted gas. A second fuel supply line 180 is connected with the second combustor 150 to provide the fuel mass flow into the second combustor 150. The hot gas generated in the second combustor 150 is experienced further expansion in a second turbine 130 (low-pressure turbine) connected downstream of the second combustor 150. A generator 160 is coaxially disposed on a driveshaft 190 with the first and second turbine 120, 130, and driven by the first turbine 120 and the second turbine 130.
Fig. 2 shows a schematic diagram of the second fuel supply line 180 according to one example embodiment of present invention. The second fuel supply line 180 comprises a fuel distribution system 220, and fuel lances 230 connected with the fuel distribution system 220 and used to eject fuel into the second combustor 150 (not shown in Fig.2). Shut-off valves 210 are arranged between the fuel distribution system 220 and each fuel lance 230. In particular, in the second fuel supply line 180, the fuel first flows into the fuel distribution system 220. The fuel distribution system 220 is configured to distribute the fuel flow entering therein into several sub-flows to the corresponding fuel lances 230 via the shut-off valves 210. Fig. 2 schematically shows three sub-flows with valves and fuel lances. However, the number of sub-flows, fuel lances and valves is not limited but may vary as needed, and the valves are not necessarily arranged on each of the sub-flows. Further, it should be noted that, even not shown in the drawings, other type of valves may be also disposed in the fuel supply line upstream or downstream of the fuel distribution system 220 as needed.

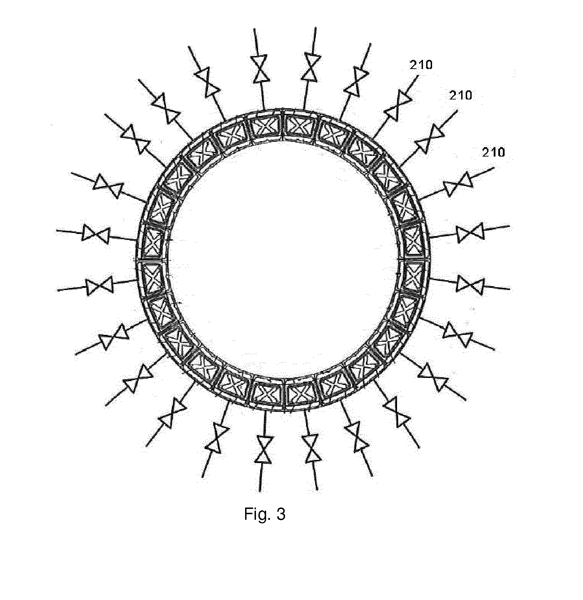

According to an embodiment as shown in Fig. 3, a plurality of shut-off valves 210 are disposed radially around a burner of the second combustor 150 with one end thereof connected with respective fuel lances 230 and the other end connected with the fuel distribution system 220.

According to an embodiment of present invention, the shut-off valves 210 can be actuated in response to de-loading of the gas turbine, such as activated upon receiving a signal from a control system of the gas turbine when load rejection occurs. As one specific implementation, the shut-off valves will then close the fuel flow to the combustor and thus the combustor can be instantly switched off in response to the load rejection. The shut-off valves may also partially close the fuel flow depending on the actual signal received from the control system.

According to an embodiment of present invention, a control method of an existing gas turbine is provided. In particular, the shut-off valves 210 are equipped on the existing gas turbines between the fuel distribution system 220 and fuel lances 230. The shut-off valves can be connected to a control system so that the valves are actuated in response to de-loading of the gas turbine through signal from the control system. In this way, the performance on fast de-loading of the existing gas turbines can be improved. It should be noted that, other type of valves than shut-off valves may be also equipped on the existing gas turbines as needed.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

### List of Reference Numerals

- 100: gas turbine
- 110: compressor unit
- 120: first turbine
- 130: second turbine
- 140: first combustor
- 150: second combustor
- 160: generator
- 170: first fuel supply line
- 180: second fuel supply line
- 190: driveshaft
- 210: shut-off valve
- 220: fuel distribution system
- 230: fuel lance

## Claims

1. A gas turbine comprising, in a flow direction of a working fluid, a first combustor, a first turbine connected downstream of the first combustor, a second combustor downstream of the first turbine, a second turbine connected downstream of the second combustor, and further comprising a compressor unit to provide compressed air to the first combustor, a first fuel supply system to provide fuel to the first combustor, a second fuel supply system to provide fuel to the second combustor, and a generator to be driven by the first and second turbine, wherein the second fuel supply system comprises a fuel distribution system to distribute the fuel supply into a plurality of fuel lances, **characterized in that** valves are disposed between the fuel distribution system and the fuel lances.

2. The gas turbine according to claim 1, **characterized in that** the valves are disposed between the fuel distribution system and each of the fuel lances respectively.

3. The gas turbine according to claim 1 or 2, **characterized in that** the valves are disposed radially around a burner of the second combustor with one end connected with the respective fuel lances and the other end connected with the fuel distribution system.

4. The gas turbine according to any of claims 1 to 3, **characterized in that** the valves are actuated in response to de-loading of the gas turbine.

5. The gas turbine according to any of claims 1 to 4, **characterized in that** the valves comprise shut-off valves.

6. A method of controlling a gas turbine having, in a flow direction of a working fluid, a first combustor, a first turbine connected downstream of the first combustor, a second combustor downstream of the first turbine, a second turbine connected downstream of the second combustor, the gas turbine further having a compressor unit to provide compressed air to the first combustor, a first fuel supply system to provide fuel to the first combustor, a second fuel supply system to provide fuel to the second combustor, and a generator to be driven by the first and second turbines, wherein the second fuel supply system comprises a fuel distribution system to distribute the fuel supply into a plurality of fuel lances, said method comprising: equipping valves disposed between the fuel distribution system and the fuel lances.

7. The method according to claim 6, **characterized in that** equipping the valves between the fuel distribution system and each of the fuel lances respectively.

8. The method according to claim 6 or 7, **characterized in that** connecting the valves to a control system so that the valves are actuated in response to de-loading of the gas turbine.

9. The method according to any of claims 6 to 8, **characterized in that** equipping the valves on an existing gas turbine to achieve an improved de-loading performance of the existing gas turbine.

10. The method according to any of claims 6 to 9, **characterized in that** the valves comprise shut-off valves.
